# EUROPÄISCHE PATENTANMELDUNG

(11) **EP 0 704 704 A2**
(43) Veröffentlichungstag der Anmeldung: **03.04.1996**
(21) Anmeldenummer: 95114592.9
(22) Anmeldetag: 16.09.1995
(51) Int. Cl.: G01P 5/00

(54) **Vorrichtung zur Lokalisierung und Visualisierung thermischer und dynamischer Vertikalwinde**

(30) Priorität: 16.09.1994 CH 2828/94
(71) Anmelder: AIRCOTEC AG, CH-6048 Horw (CH)
(72) Erfinder: Porod, Klaus, Dipl.-Ing., A-8114 Stübing (AT)
(74) Vertreter: Arato, Laszlo

(57) **Zusammenfassung**

Es wird eine Vorrichtung für die Verbesserung der Wahrnehmung thermischer und dynamischer Auf- und Abwinde an Bord eines Luftfahzeugs vorgeschlagen. Diese Vorrichtung besteht aus einer Signalverarbeitungseinrichtung (4), einer Steuereinrichtung (5), einer Anzeigeeinrichtung (6), einer Positionsermittlungseinrichtung (1), einer Luftdatenerfassungseinrichtung (7) sowie aus einer Flugdatenaufzeichnungseinrichtung (2) und einer Vertikalwind-Datenbank (3). Im Fenster der Anzeigeeinrichtung (6), die einen kartenartigen Ausschnitt der überflogenen Landschaft darstellt, werden die bekannten Auf- und Abwinde 24,25 dargestellt. Die aktuellen Daten des Flugzustandes wie die Fahrt- (20) und Steiggeschwindigkeit (22) sowie die Flughöhe (21) werden angezeigt. Durch die mit einem Kreis markierte Mitte des kartenartigen Ausschnitts der Anzeigevorrichtung (6) wird die aktuelle Position der geografischen Koordinaten und mit einem uhrzeigerähnlichen Zeiger die Windrichtung (23) angezeigt.

## Beschreibung

Die Erfindung betrifft eine Vorrichtung zur Lokalisierung und Visualisierung thermischer und dynamischer Vertikalwinde, gemäss dem Oberbegriff des Anspruches 1.

Das motorlose Fliegen ist ein ständiges Fallen. Um trotz des Fallens steigen zu können, oder mindestens das Verweilen im Flugzustand zu verlängern, bedarf es Aufwinde. Solche Aufwinde sind thermischer oder dynamischer Natur. Eine Thermik ist die Aufwärtsbewegung der Luft nach Einstrahlung der Sonne und der Erwärmung des Erdbodens und der Konvektion. Die Aufwärtsbewegung der Luft entsteht wegen Ausweichung des Windes an Berghängen oder am Wellenbergen sinusförmiger Schwingung strömender Luftmassen, beispielsweise des Föhns.
Für die Flugsicherheit von Luftfahrzeugen geringer Gleitzahl ist die Ortung und Quantifizierung der Abwinde von grosser Bedeutung, da solche Luftfahrzeuge für das fluchtartige Verlassen des Abwindes wegen der Langsamkeit und der drastischen Zunahme des Sinkens bei Erhöhung der Fluggeschwindigkeit ungeeignet sind. Deshalb sollen Deltasegler und insbesondere Gleitschirmflieger Abwinde konsequent meiden.
Die Kausalität des Wetters mit dem Gelände wird dem angehenden Pilot gelehrt. Der Pilot erfährt die Bestätigung dieser Regeln nach der theoretischen Prüfung in der Landschaft seiner Flüge. Die Erfahrung wird ihm zeigen, dass das Fliegen mit blauer Thermik, also ohne sichtbare Indikation kondensierender Feuchte (=Wolke), und/oder im turbulentem unfreundlichem Wetter, möglich ist. Entsprechend der Erweiterung der Flugtätigkeit auf weniger bekannte oder unbekannte Gebiete wird die Flugerfahrung vertieft. Dass dieses Sammeln der Flugerfahrung, mit Ereignissen glücklicher und weniger glücklicher Art verknüpft ist, wird als Herausforderung empfunden und mangels "Thermikbrille" in Kauf genommen.

Der Efindung liegt daher die Aufgabe zugrunde eine Vorrichtung zur Lokalisierung und Visualisierung thermischer und dynamischer Vertikalwinde (also eine Art Thermikbrille) zu schaffen.

Erfindungsgemäss wird diese Aufgabe gelöst durch die kennzeichnenden Merkmale des Anspruchs 1.

Die durch die Erfindung erreichten Vorteile sind vielfältig. Zunächst eignet sich die Vorrichtung für die dreidimensionale Aufzeichnung eines individuellen Fluges. Die Summe solcher Flüge ergibt ein elektronisches Flugbuch mit Vermerk des Datums, der Uhrzeit und der Orte signifikanten Steigens und Sinkens. Aus der Summe der Aufzeichnungen wird bei Wiederholung des Fluges die erkannte Zone der erflogenen Auf- und Abwinde angezeigt. Aus den Flugbüchern verschiedener Piloten, beispielsweise eines Vereins, oder der Flugschüler einer Flugschule entstehen Vertikalwind-Datenbanken einer Gegend, die später für eigene Verwendung oder dem Nachwuchs zur Verfügung gestellt werden können. Zugleich wird die graphische Indikation der Orte bedeutenden Vertikalwindstellen und somit der Druck von meteorographischen(von Meteo=Wetter, oro (gr)=Berg, graphie (gr)=Beschreibung) Flugkarten ermöglicht. Es liegt auf der Hand, dass die Erweiterung der Flugdatensammlung über Regionen grössere Gebiete, wie beispielweise das Gebiet der Alpen oder ganze Kontinente, meteorographisch erfasst und für Piloten in Form von elektronischen Flugdaten, oder gedruckten Karten zur Verfügung gestellt werden kann. Die Benützung der Vorrichtung und die entsprechenden elektronischen Bibliotheken sind für die Wettbewerbsfliegerei ebenso von Nutzen, wie die Fähigkeit der Vorrichtung, Wettbewerbs oder Bedingungsflüge, beispielseise nach den Regeln des FAI (Fèdèration Aéronautique International), zu speichern und zu dokumentieren. Ein solches Beurkundungssystem für den Stand der Technik für Segelflugzeuge und Motorsegeler ist das "DOKU 1" genanntes Beurkundungssystem sowie das PC-Barograph als elektronisches Flugprotokoll der Firma Gebrüder Winter GmbH & Co Kg in D-7455 Jungingen. Dem gegenüber ist mit dem Stand der Technik dieser Geräte das Erfliegen wie das Auswerten der Flugdaten der vorgeschlagenen Vorrichtung einiges einfacher, denn es sind weder Zielfotos beim Fliegen zu erstellen, noch sind solche Aufnahmen zu beurteilen, um die Echtheit der Flugdaten zu prüfen. Diese Vereinfachung für die Homologisierung von Wettbewerbs und Leistungsflügen dürfte sowohl von den Piloten wie von den zuständigen Luftfahrtverbänden von Interesse sein. Von Bedeutung ist die vorgeschlagene Vorrichtung auch als Flugschreiber. Solche Geräte sind bei der Untersuchung des Hergangs von Flugunfällen von Bedeutung, wenn es um die Rekonstruktion der kritischen Phasen eines Fluges und um die Ursachen des Geschehens geht. Schliesslich kann die Möglichkeit der statistischen Auswertung georteter Flugdaten für die Verbesserung der Auflösung und der Qualität meterologischer Prognosen genannt werden, die wegen der Grobmaschigkeit der Wetterstationen und der Komplexität zergliederter Landschaften vielfach noch sehr ungenau sind.

Im folgenden wird die Erfindung anhand einer Ausführungsform darstellenden Zeichnung näher erläutert. Es zeigt:
- Fig. 1: das Blockschaltbild der Vorrichtung,
- Fig. 2: den Beleg eines Fluges,
- Fig. 3: den Ausschnitt einer Flugkarte mit Auf- und Abwindzonen.

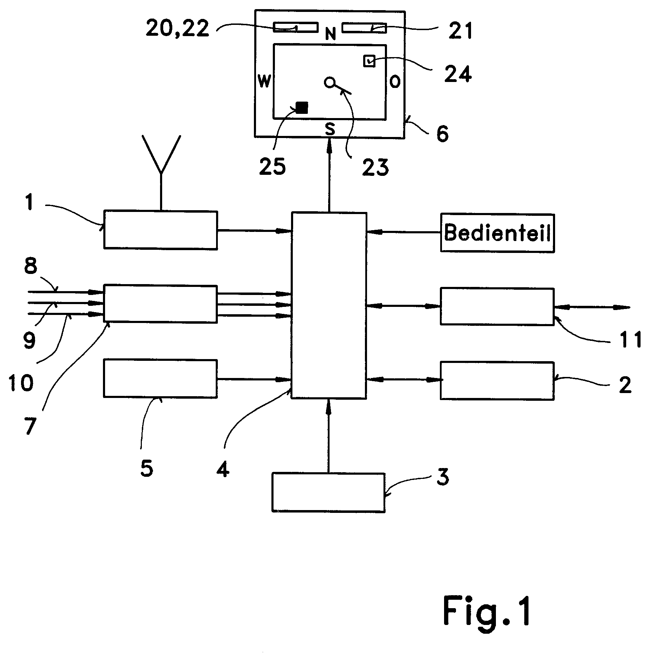

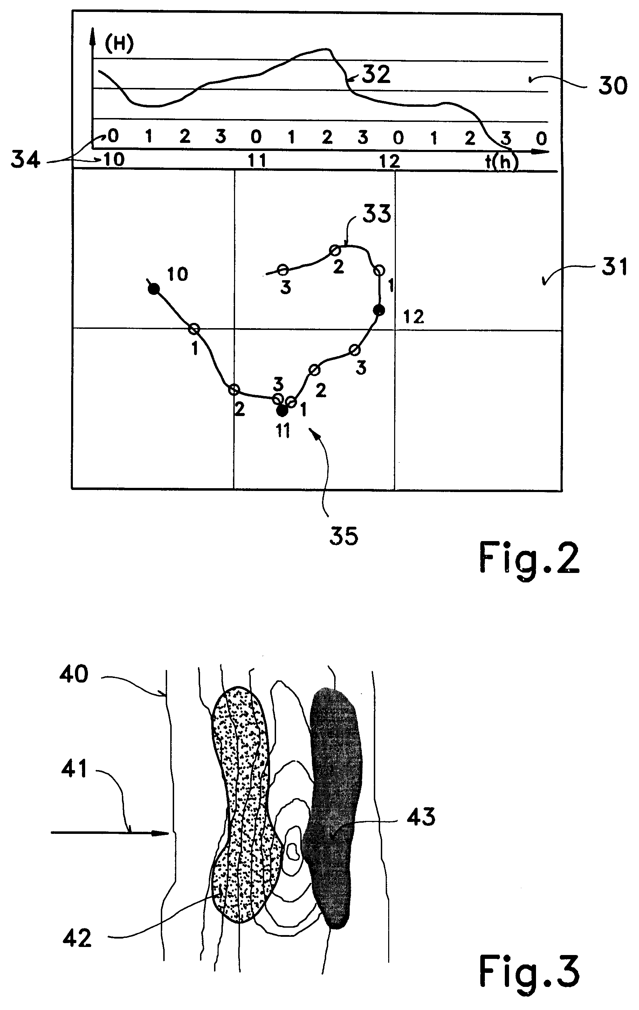

Das in Fig. 1 gezeigte Blockschaltbild der Vorrichtung zur Lokalisierung und Visualisierung thermischer und dynamischer Vertikalwinde besteht aus einer Signalverabeitungseinrichtung 4, einer Steuereinrichtung 5, einer Anzeigeeinrichtung 6, einem Bedienteil und diversen Speichern sowie Ein- und Ausgängen. Als Positionsermittlungseinrichtung 1 zur Erzeugung von Signalen, die der geografischen Position und der Höhe der Vorrichtung entsprechen, dient ein Radioempfänger mit Antenne. Eine solche marktgängige Einrichtung ist beispielsweise das GPS Modul der Sateliten-Navigation, des Erde umfassenden globale Ortungssystem (NAVSTAR Global Positioning System) des Verteidigungsministeriums der USA, das Daten der Sateliten für die zivile Nutzung zulässt. Die Signale der Positionsermittlungseinrichtung 1, wie die Messwerte des statischen Luftdrucks 8, des Staudrucks 9 und der Lufttemperatur 9 gelangen durch die Luftdatenerfassungseinrichtung 7 in die Signalverarbeitungseinrichtung 4, wo sie nach Instruktionen der Steuereinrichtung 5 verarbeitet, in die Anzeigeeinrichtung 6 angezeigt und in der Flugdatenerfassung 2 gespeichert werden. Entsprechend der Position der Vorrichtung zur Lokalisierung und Visualisierung von Vertikalwinden werden die bestehenden Daten der Vertikalwind-Datenbank 3 als Auf- 24 oder Abwinde 25 in der Anzeigeeinrichtung 6, beispielsweise durch leere 24 oder gefüllte 25 Quadrate, angezeigt, wobei die Grösse der Quadrate 24,25 proportional zu den bereits vorgefundenen respektive zu erwartenden Auf- oder Abwinden sind. Die Anzeigeeinrichtung 6 weist beispielsweise drei Fenster auf für die Anzeige der Fahrt- 20 und Steiggeschwindigkeit 22, für die Flughöhe 21, sowie die geografischen Koordinaten der aktuellen Position. Die Eigenposition wird in der Mitte, des mit den Himmelsrichtungen markierten Fensters, mit einem Kreis dargestellt. Die herrschende Windrichtung bezüglich Kartennord erscheint im Form einer uhrzeigerähnlichen Windrichtungsanzeige 23. Vorteilhafterweise wird die in Figur 1 dargestellte Vorrichtung in ein einziges Gehäuse eingebaut, einschliesslich des Bedienteiles, beispielsweise mit diversen Tasten und einer Schnittstelle 11 für die Datenkommunikation integriert und mit einer nicht dargestellten Stromquelle, mit Befestigungen am Fluggerät oder wenn das Fluggerät ein Gleitschirm ist, bespielsweise am Gurtzeug im Augenhöhe des Piloten, versehen. Die Schnittstelle 11 gestattet das Laden und Ausgabe des Daten in die Vertikalwind-Datenbank 3, sowie die Ausgabe der Daten der Flugdatenaufzeichnungseinrichtung 2 auf ein Flugbeleg gemäss Figur 2.

Das im Figur 2 dargestellte Flugbeleg ist die Schlussphase eines Fluges mit Kongruenz der Flughöhen 32 und des Flugweges 33 zwischen 10 bis 12h 45 Uhr. Das obere Drittel der Darstellung ist die Darstellung der Flughöhen (H) in Funktion der Zeit t(h), auch Barogramm 30 genannt, des im Kartenausschnittes 31 gezeigten Flugweges 33 in geographischen Längen und Breiten. Der Flugweg 33 enthält die Zeitmarken 34 viertelstundenweise. Das durch Kreisen entstehende längere Verweilen am Ort wird die Kummulierung der Zeitmarken 35 vom Flugweg 33 im Kartenausschnitt 31 zur Folge haben. Solche Stellen des Flugweges sind, dank hoher Dichte der Flugdaten und durch das Zoomen der Darstellung entsprechend der Genauigkeit des Sateliten-Navigationssystems vergrösserbar. Sie beträgt für das GPS, mit 24 Sateliten und im zweikanal Verfahren, das zur Zeit militärischen Anwendungen vorbehalten ist, etwa 10 m in der Länge und Breite und 1-1,5 m in der Höhe, und für zivile Anwendungen (im Einkanal-Verfahren und auf 1575 MHz) etwa das zehnfache.
Im Figur 3 ist beispielsweise der Ausdruck der Auf- und Abwindzone 42,43 einer meteorografischen Flugkarte bei Westwind 41 eine Topografie mit Höhenlinien 40 und Nord-Süd-Verlauf, wie beispielsweise den Vogesen, vorhanden. Wird diese Topografie von Osten her angeströmt, so invertieren sich die Vertikalwinde von Auf- in Abwind 42,43 in Ab- und Aufwindzonen.
Meteorografische Flugkarten sind eine Funktion der Wetterlage, der Ekliptik und der Dauer der lokalen Sonneneinstrahlung. Um die Vielfalt der Variablen einzuschränken erscheint in Europa die Berücksichtigung von Wetterlagen wie folgt
- das zentrale Sommerhoch,
- die Nordost- und Ostlage,
- die Südwestlage,
- die Westlage,
- die Nordwestlage,
- die Südost- bis Südlage.
Je nach Region wird sich die Priorität der Wetterlagen und die Vielfallt der Wetterlagen reduzieren.

## Patentansprüche

1. Vorrichtung zur Lokalisierung und Visualisierung thermischer und dynamischer Vertikalwinde, bestehend aus:
einer Einrichtung (1) zur Erzeugung von Signalen, die der geografischen Position und der Höhe der Vorrichtung entsprechen,
einer zweiten Einrichtung (2), wo diese Signale als Funktion der Zeit gespeichert werden,
einer dritten Einrichtung (3), in der die geografische Position und die Grösse bekannter Vertikal-winde gespeichert sind,
einer vierten Einrichtung (4), zur Verarbeitung der Signale der vorgenannten Einrichtungen (1,2,3),
einer fünften Einrichtung (5), zur Steuerung der Signalverarbeitungseinrichtung (4) und einer Einrichtung (6), zur Anzeige der Signale der Flugdatenaufzeichnungseinrichtung (2) und der Vertikalwind-Datenbank (3).

2. Vorrichtung nach Anspruch 1, dadurch gekennzeichnet, dass die Signalverarbeitungseinrichtung (4) auch Signale der Luftdatenerfassungseindrichtung (7) zur Erfassung des statischen Luftdrucks (8), des Staudrucks (9) und der Lufttemperatur (10) verarbeitet, zur Messung und Anzeige der Fahrtgeschwindigkeit (Airspeed) (20), der barometrischen Höhe (21) und der barometrisch ermittelten Vertikalgeschwindigkeit (22).

3. Vorrichtung nach den Ansprüchen 1 und 2, dadurch gekennzeichnet, dass die Anzeigeeinrichtung (6) die geografische Position im Rahmen einer Karten-darstellung der Umgebung mit geografischen Längen- und Breitenangaben zur Anzeige bringt.

4. Vorrichtung nach den Ansprüchen 1 bis 3, dadurch gekennzeichnet, dass die Anzeige (6) die aktuellen Daten des Flugzustandes, wie die Fahrt- (20) und Steiggeschwindigkeit (22), die Flughöhe (21) sowie die geografischen Koordinaten der aktuellen Position anzeigt.

5. Vorrichtung nach den Ansprüchen 3 oder 4, dadurch gekennzeichnet, dass die Eigenposition der Vorrichtung in der Mitte der Kartendarstellung gehalten wird, und die herrschende Windrichtung in Form eines uhrzeigerähnlichen Windrichtungsanzeigers (23) dargestellt wird.

6. Vorrichtung nach den Ansprüchen 1 bis 5, dadurch gekennzeichnet, dass die Anzeigeeinrichtung (6) die geografische Lage der in der Vertikalwind-Datenbank (3) gespeicherten bekannten Aufwindfelder (24) und Abwindfelder (25) anzeigt.

7. Vorrichtung nach den Ansprüchen 1 bis 6, dadurch gekennzeichnet, dass die bekannten Auf- (42) und Abwindfelder (43) in der Kartendarstellung erscheinen.

8. Vorrichtung nach den Ansprüchen 1 bis 7, dadurch gekennzeichnet, dass die Vorrichtung eine Datenaustauscheinrichtung (11) für den Austausch von Signalen und Daten aufweist.

9. Vorrichtung nach den Ansprüchen 1 bis 8, dadurch gekennzeichnet, dass die Datenaustauscheinrichtung (11) für die Übermittlung von Streckenflugdaten dient.

10. Ausdruck der Flugdaten der Vorrichtung nach den Ansprüchen 1 bis 9, dadurch gekennzeichnet, dass er ein Barogramm (30) und einen Kartenausschnitt (31) mit dem Flugweg (33) enthält, und die Zeitmarken (34) des Barogramms auch als Zeitmarken am Flugweg (33) angebracht sind.

11. Kartendarstellung eines Geländes, gekennzeichnet durch die zusätzliche Darstellung von statistisch warhscheinlichen Aufwind- und Abwindfeldern, deren wahrscheinliches Auftreten und Grenzen mittels einer Vorrichtung nach den Ansprüchen 1 bis 10 ermittelt wurden
